# EUROPÄISCHE PATENTANMELDUNG

(11) **EP 4 806 568 A1**
(43) Veröffentlichungstag der Anmeldung: **16.09.2026**
(21) Anmeldenummer: 26164644.2
(22) Anmeldetag: 13.03.2026
(51) Int. Cl.: B21D 51/26, G05B 19/00, G06N 3/00

(54) **VORRICHTUNG UND VERFAHREN ZUM VERSCHLIESSEN VON DOSEN**

(30) Priorität: 14.03.2025 DE 102025109922
(71) Anmelder: Krones AG, 93073 Neutraubling (DE)
(72) Erfinder: KNIELING, Erwin, 93073 Neutraubling (DE); LEIDEL, Marco, 93073 Neutraubling (DE)
(74) Vertreter: Nordmeyer, Philipp Werner

(57) **Zusammenfassung**

Vorrichtung (1) und Verfahren zum Verschließen von Dosen (2), umfassend jeweils einen Dosenkörper (2a) und Deckel (2b), vorzugsweise in einer Getränkeabfüllanlage, wobei die Vorrichtung (1) aufweist: zumindest ein Falzwerkzeug (10), das eingerichtet ist, um einen Verschließvorgang durch Falzen von zu verbindenden Abschnitten des Dosenkörpers (2a) und des Deckels (2b) zu einem dichtenden Verbund durchzuführen; zumindest eine Werkzeugüberwachungseinrichtung (30), die eingerichtet ist, um einen Zustand des zumindest einen Falzwerkzeugs (10) zu detektieren; und eine Steuereinrichtung (50), die mit der Werkzeugüberwachungseinrichtung (30) in Kommunikation steht und eingerichtet ist, um anhand des von der Werkzeugüberwachungseinrichtung (30) detektierten Zustands einen fehlerhaften Verschließvorgang zu ermitteln.

## Beschreibung

### Technisches Gebiet

Die vorliegende Erfindung betrifft eine Vorrichtung und ein Verfahren zum Verschließen von Dosen, vorzugsweise in einer Getränkeabfüllanlage.

### Stand der Technik

Zur Verpackung von Getränken, Lebensmittelkonserven aber auch Waren außerhalb der Lebensmittelindustrie werden unter anderem Dosen eingesetzt. Dosen, insbesondere aus einem Metall wie etwa Weißblech, sind robust, weisen ein geringes Gewicht auf und sind zum Schutz des abgefüllten Produkts licht- und sauerstoffundurchlässig.

Vor dem Befüllen der Dosen liegen diese zunächst zweiteilig vor, umfassend einen Dosenkörper und einen Deckel, die erst nach dem Befüllen zu einer gas- und flüssigkeitsdichten Verpackung miteinander verbunden werden. Der Vorgang des Verschließens erfolgt in einem Dosenverschließer durch einen mechanischen Verformungsprozess, bei dem der Dosenkörper und der Deckel zu einem dichten, zumeist mehrlagigen Verbund gefalzt werden. Diese falzende Verbindungstechnik wird durch die vereinte Drehung von Dose und Deckel, zentriert in einem Falzkopf, entlang von Bördelrollen realisiert. Hierbei werden Umformkräfte auf die miteinander zu verbindenden Abschnitte des Dosenkörpers und des Deckels ausgeübt, um eine Faltung/Falz, zumeist Doppelfalz, auszubilden.

Sofern der Verschließvorgang, d.h. die Ausbildung des Dosenfalzes, nicht fehlerlos erfolgt, können Beschädigungen oder Abrieb, sogenanntes Engelshaar, an der Dose und/oder am Deckel entstehen. Die Ursache können beispielsweise falsche Maschineneinstellungen, beschädigte oder verschlissene Falzwerkzeuge sein.

Eine Prüfung beziehungsweise Qualitätskontrolle der befüllten und verschlossenen Behälter ist insbesondere im Fall von Dosen oft aufwendig und mit Produktionsverlusten verbunden, nicht zuletzt aufgrund der metallischen, lichtundurchlässigen Beschaffenheit, die eine nachträgliche Prüfung des Doseninhalts erschwert. Es ist diesbezüglich üblich, eine stichprobenartige Qualitätskontrolle, umfassend die Überprüfung der Falzverbindung zwischen Dosenkörper und Deckel, durchzuführen. Durch das Intervall der stichprobenartigen Prüfung, beispielsweise 8 Stunden, kann es vorkommen, dass große Mengen an Ausschussdosen produziert werden. Denn im Fall einer negativen Stichprobe müssen alle Dosen, die in dem Zeitraum zwischen den Prüfungen produziert worden sind, als fehlerhaft angenommen werden.

### Darstellung der Erfindung

Eine Aufgabe der Erfindung besteht darin, eine verbesserte Vorrichtung und ein verbessertes Verfahren zum Verschließen von Dosen, vorzugsweise in einer Getränkeabfüllanlage, bereitzustellen, insbesondere die Qualitätsprüfung des Verschließvorgangs zu verbessern.

Die Aufgabe wird durch eine Vorrichtung mit den Merkmalen des Anspruchs 1 sowie ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung und das Verfahren gemäß der Erfindung betreffen das Verschließen von Dosen, wobei es sich hierbei vorzugsweise um Dosen aus einem Metall oder mit einem metallischen Anteil, wie etwa Aluminium oder Weißblech, handelt. Jede Dose umfasst einen Dosenkörper und einen Deckel, die durch den Verschließvorgang miteinander verbunden werden, so dass ein verschlossener, bevorzugt gas- und flüssigkeitsdichter Behälter entsteht.

Die zu verschließenden Dosen sind in der Regel mit einem Füllprodukt befüllt, umfassend insbesondere Getränke. Die Vorrichtung und das Verfahren kommen besonders bevorzugt in einer Getränkeabfüllanlage zur Anwendung, beispielsweise zum Abfüllen von Wasser (still oder karbonisiert), Bier, Saft, Softdrinks, Smoothies, Milchprodukten, Mischgetränken und dergleichen.

Die Vorrichtung weist zumindest ein Falzwerkzeug auf, das eingerichtet ist, um einen Verschließvorgang durch Falzen von zu verbindenden Abschnitten des Dosenkörpers und des Deckels zu einem dichtenden Verbund durchzuführen. Der Verschließvorgang umfasst somit zumindest abschnittsweise eine mechanische Umformung des Dosenkörpers und/oder Deckels.

Die Vorrichtung umfasst ferner zumindest eine Werkzeugüberwachungseinrichtung, die eingerichtet ist, um einen Zustand des zumindest einen Falzwerkzeugs zu detektieren, und eine Steuereinrichtung, die mit der Werkzeugüberwachungseinrichtung in Kommunikation steht und eingerichtet ist, um anhand des von der Werkzeugüberwachungseinrichtung detektierten Zustands einen fehlerhaften Verschließvorgang zu ermitteln.

Die Vorrichtung, ausgestattet mit einer oder mehreren Werkzeugüberwachungseinrichtungen, ermöglicht so eine Qualitätsprüfung der verschlossenen Dosen über den indirekten Weg der Überwachung der Falzwerkzeuge. Eine Grauzone der stichprobenartigen Produktsicherung wird geschlossen. Die Anzahl an etwaigen fehlerhaften Dosen, d.h. der Ausschuss, kann signifikant reduziert werden. Da die Werkzeugüberwachungseinrichtungen in Zusammenarbeit mit der Steuereinrichtung automatisiert eine maschinenseitige Überwachung durchführt, können Bedienfehler ausgeschlossen oder zumindest reduziert werden. Die Zustandsüberwachung der Falzwerkzeuge ist kontinuierlich und lückenlos möglich, wodurch letztlich eine (indirekte) Qualitätsprüfung jeder einzelnen, produzierten Dose realisierbar ist. Neben der angestrebten Qualitätsprüfung der Dosen ermöglicht die Werkzeugüberwachung zusätzlich ein Monitoring des Verschleißzustands der Falzwerkzeuge.

Die Steuereinrichtung kann eingerichtet sein, um bei Ermittlung eines fehlerhaften Verschließvorgangs eine oder mehrere geeignete Maßnahmen einzuleiten, umfassend beispielsweise das Ausgeben einer Meldung beziehungsweise Warnung und/oder eine Einflussnahme auf nachfolgende Schließvorgänge. Eine solche Einflussnahme kann beispielsweise das Auslassen beziehungsweise Deaktivieren des betroffenen Falzwerkzeugs oder einen Stopp der Vorrichtung beziehungsweise des Prozesses umfassen.

Die Ermittlung eines etwaigen fehlerhaften Verschließvorgangs anhand des detektierten Zustands durch die Steuereinrichtung kann auf unterschiedliche Art und Weise erfolgen. So ist die Steuereinrichtung vorzugsweise eingerichtet, um auf einen fehlerhaften Verschließvorgang des von der Werkzeugüberwachungseinrichtung detektierten Zustands zu schließen, wenn der Zustand und/oder eine zeitliche Änderung des Zustands außerhalb eines zulässigen Bereichs liegen. Weicht der detektierte Zustand oder eine Änderung desselben vom zulässigen Bereich ab, ist anzunehmen, dass am betreffenden Falzwerkzeug Schäden vorliegen, welche die Dosenqualität beeinträchtigen können. Der definierte, zulässige Bereich kann über Erfahrungswerte und/oder Beobachtung erhalten werden. Der zulässige Bereich kann beispielsweise als Parameterbereich vorliegen und/oder durch einen oder mehrere Schwellwerte definiert sein.

Alternativ oder zusätzlich kann die Steuereinrichtung eingerichtet sein, um einen fehlerhaften Verschließvorgang des von der Werkzeugüberwachungseinrichtung detektierten Zustands durch Vergleich mit einer Modellrechnung und/oder Eingabe in ein Kl-Modell zu ermitteln.

Alternativ oder zusätzlich ist es möglich, dass Zustände mehrerer Falzwerkzeuge miteinander verglichen werden, wobei eine Abweichung eines Werkzeugzustands oder weniger Werkzeugzustände von den übrigen Werkzeugzuständen auf einen Fehlerzustand des betreffenden Falzwerkzeugs beziehungsweise der betreffenden Falzwerkzeuge hindeutet. In diesem Fall ist die Steuereinrichtung eingerichtet, um einen fehlerhaften Verschließvorgang eines der Falzwerkzeuge durch Vergleich mit den Zuständen der anderen Falzwerkzeuge zu ermitteln. Die Ermittlung eines etwaigen fehlerhaften Verschließvorgangs ist somit auch ohne Vergleich mit zulässigen Bereichen (Parameterbereiche, Schwellwerte usw.) und auch ohne Heranziehung von Modellen und dergleichen möglich, indem die Zustände verschiedener Falzwerkzeuge miteinander verglichen werden.

Vorzugsweise weist die zumindest eine Werkzeugüberwachungseinrichtung eine oder mehrere Kameras zur optischen Detektion eines Zustands des zumindest einen Falzwerkzeugs auf. Die Steuereinrichtung kann diesbezüglich eingerichtet sein, um einen fehlerhaften Verschließvorgang zu ermitteln, etwa im Fall von erhöhtem Verschleiß und/oder von Abrieb und/oder Engelshaar und/oder Beschädigungen des zumindest einen Falzwerkzeugs und/oder im Fall eines fehlenden Dosenkörpers und/oder Deckels. Auf diese Weise lässt sich die Qualität des Verschließvorgangs, insbesondere des Dosenfalzes, in Abhängigkeit einer optischen Bestandsaufnahme des betreffenden Falzwerkzeugs beurteilen. Die optische Überwachung mittels einer oder mehrerer Kameras hat einen besonderen Vorteil darin, dass eine etwaige Beschädigung oder dergleichen mit sehr geringer Reaktionszeit erkannt werden kann und von der Steuereinrichtung entsprechende Maßnahmen (Ausgabe einer Warnung, Auslassen betroffener Falzstationen, Anagenstopp usw.) sehr schnellt ergriffen werden können.

Alternativ oder zusätzlich weist die zumindest eine Werkzeugüberwachungseinrichtung zumindest einen Temperatursensor auf, der eingerichtet ist, um eine Temperatur als Zustand des zumindest einen Falzwerkzeugs zu detektieren. Die Temperaturmessung kann durch Kontakt oder kontaktlos erfolgen, beispielsweise mittels eines Pyrometers. Weicht der Temperaturwert am Falzwerkzeug von einem zulässigen Bereich oder relativ zu anderen Falzwerkzeugen ab, dürften Auffälligkeiten am Verschließer vorliegen, welche die Dosenqualität beeinträchtigen können.

Alternativ oder zusätzlich zu einer optischen und/oder temperaturbasierten Werkzeugüberwachungseinrichtung kann die Werkzeugüberwachung auch auf einem anderen technischen Prinzip beruhen, beispielsweise auf einer Kraftmessung, Beschleunigungsmessung usw. des zu überwachenden Falzwerkzeugs.

Vorzugsweise umfasst das zumindest eine Falzwerkzeug einen Falzkopf und/oder eine oder mehrere Bördelrollen. Die Herstellung der Falzverbindung zwischen Dosenkörper und Deckel erfolgt in diesem Fall durch vereinte Drehung des Dosenkörpers und des Deckels, zentriert durch den Falzkopf, entlang der Bördelrolle(n). Der Falzkopf hat die Aufgabe, den Dosenkörper und Deckel durch einen gewissen Kopfdruck (Axialkraft relativ zur Dose gesehen) in Drehung zu versetzen und den Dosenkörper und Deckel an den Bördelrollen vorbeizudrehen. Der Falzkopf und die Bördelrollen weisen eine Werkzeugkontur auf, die ein negatives Profil der Zielkontur des Dosen/Deckelverbunds ist.

Vorzugsweise kommen bei dem Verschließvorgang genau zwei Bördelrollen, insbesondere mit verschiedenen Werkzeugkonturen, je Dose zum Einsatz, eine Bördelrolle zur Vorverformung und eine Bördelrolle zur Fertigverformung.

Vorzugsweise umfasst das zumindest eine Falzwerkzeug einen Falzkopf und eine oder mehrere Bördelrollen, wobei der Temperatursensor eingerichtet ist, um eine Temperatur zumindest einer der Bördelrollen zu detektieren, vorzugsweise nicht jedoch des Falzkopfes, wodurch die Werkzeugüberwachung maschinenbaulich einfach und dennoch zuverlässig umsetzbar ist.

Vorzugsweise ist die Vorrichtung in Rundläuferbauweise ausgeführt, d.h. sie umfasst in diesem Fall ein Verschließerkarussell und mehrere Falzwerkzeuge, die am Außenumfang des Verschließerkarussells installiert sind. Auf diese Weise kann ein kontinuierlicher Strom an Dosen auf baulich kompakte Weise verarbeitet werden.

Die eine oder mehreren Werkzeugüberwachungseinrichtungen sind vorzugsweise außerhalb des Arbeitsbereichs der Falzwerkzeuge angeordnet. So können die Werkzeugüberwachungseinrichtungen beispielsweise außerhalb des Verschließerkarussells und relativ dazu stationär installiert sein und/oder auf einen Bereich des Verschließerkarussells, der zwischen einem Verschließereinlaufstern und einem Verschließerauslaufstern liegt, gerichtet sein.

Alternativ ist es auch möglich, eine oder mehrere Werkzeugüberwachungseinrichtungen am Verschließerkarussell oder mitlaufend dazu zu installieren, wobei in diesem Fall beispielsweise einer Falzstation oder einer Gruppe von Falzstationen eine eigene Werkzeugüberwachungseinrichtung zugeordnet sein kann.

Die oben genannte Aufgabe wird ferner durch ein Verfahren zum Verschließen von Dosen, vorzugsweise in einer Getränkeabfüllanlage, gelöst, wobei das Verfahren aufweist: Durchführen eines Verschließvorgangs, indem zu verbindende Abschnitte des Dosenkörpers und des Deckels mittels eines Falzwerkzeugs zu einem dichtenden Verbund gefalzt werden; Detektieren eines Zustands des Falzwerkzeugs mittels einer Werkzeugüberwachungseinrichtung; und Ermitteln eines fehlerhaften Verschließvorgangs anhand des von der Werkzeugüberwachungseinrichtung detektierten Zustands mittels einer Steuereinrichtung, die mit der Werkzeugüberwachungseinrichtung in Kommunikation steht.

Die Merkmale, technischen Wirkungen, Vorteile sowie Ausführungsbeispiele, die in Bezug auf die Vorrichtung beschrieben wurden, gelten analog für das Verfahren.

So schließt die Steuereinrichtung aus den oben genannten Gründen vorzugsweise dann auf einen fehlerhaften Verschließvorgang des von der Werkzeugüberwachungseinrichtung detektierten Zustands, wenn der Zustand und/oder eine zeitliche Änderung des Zustands außerhalb eines zulässigen Bereichs liegen. Alternativ oder zusätzlich ermittelt die Steuereinrichtung einen fehlerhaften Verschließvorgang des von der Werkzeugüberwachungseinrichtung detektierten Zustands durch Vergleich mit einer Modellrechnung und/oder Eingabe in ein Kl-Modell.

Vorzugsweise sind mehrere Falzwerkzeuge vorgesehen, wobei die Werkzeugüberwachungseinrichtung einen Zustand jedes der Falzwerkzeuge detektiert und die Steuereinrichtung aus den oben genannten Gründen einen fehlerhaften Verschließvorgang eines der Falzwerkzeuge durch Vergleich mit den Zuständen der anderen Falzwerkzeuge ermittelt.

Vorzugsweise umfasst die Werkzeugüberwachungseinrichtung aus den oben genannten Gründen eine oder mehrere Kameras zur optischen Detektion eines Zustands des Falzwerkzeugs, wobei die Steuereinrichtung beispielsweise einen fehlerhaften Verschließvorgang ermittelt im Fall von erhöhtem Verschleiß und/oder von Abrieb und/oder Engelshaar und/oder Beschädigungen des Falzwerkzeugs und/oder im Fall eines fehlenden Dosenkörpers und/oder Deckels.

Vorzugsweise weist die Werkzeugüberwachungseinrichtung aus den oben genannten Gründen zumindest einen Temperatursensor auf, der eine Temperatur als Zustand des zumindest einen Falzwerkzeugs detektiert, wobei der Temperatursensor vorzugsweise ein kontaktloser Temperatursensor, etwa ein Pyrometer, ist.

Vorzugsweise umfasst das zumindest eine Falzwerkzeug einen Falzkopf und eine oder mehrere Bördelrollen, wobei der Temperatursensor aus den oben genannten Gründen eine Temperatur zumindest einer der Bördelrollen detektiert, vorzugsweise nicht jedoch des Falzkopfes.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch einen Ausschnitt einer Vorrichtung zum Verschließen von Dosen mit einer Werkzeugüberwachungseinrichtung;
- Figur 2: einen größeren Ausschnitt der Vorrichtung zum Verschließen von Dosen; und
- Figur 3: eine schematische Draufsicht auf ein Verschließerkarussell, vor dem ein Verschließereinlaufstern und hinter dem ein Verschließerauslaufstern angeordnet sind.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

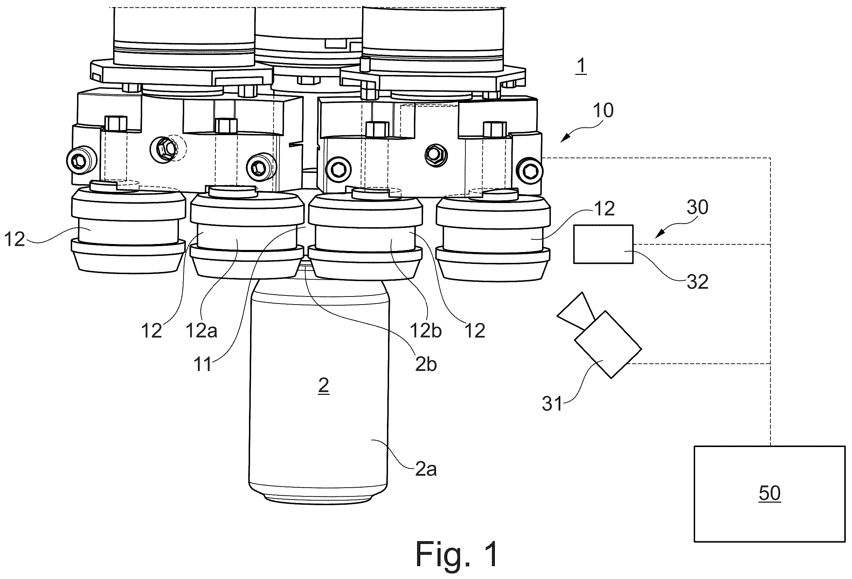

Die Figur 1 ist eine schematische Ansicht eines Ausschnitts einer Vorrichtung 1 zum Verschließen von Dosen 2. Besonders bevorzugt handelt es sich hierbei um Dosen aus einem Metall oder mit einem metallischen Anteil wie Aluminium oder Weißblech.

Die zu verschließenden Dosen 2 sind mit einem Füllprodukt befüllt, umfassend insbesondere Getränke. Die Vorrichtung 1 kommt besonders bevorzugt in einer Getränkeabfüllanlage zur Anwendung, beispielsweise zum Abfüllen von Wasser (still oder karbonisiert), Bier, Saft, Softdrinks, Smoothies, Milchprodukten, Mischgetränken und dergleichen.

Die Dose 2 umfasst einen Dosenkörper 2a und einen Deckel 2b, die durch den Verschließprozess miteinander verbunden werden, so dass ein gas- und flüssigkeitsdichter Behälter entsteht. Im Verschließprozess werden dabei die zu verbindenden Abschnitte des Dosenkörpers 2a und des Deckels 2b mittels eines oder mehrerer geeigneter Falzwerkzeuge 10 zu einem dichten, insbesondere mehrlagigen Verbund gefalzt.

Im vorliegenden Ausführungsbeispiel umfassen die Falzwerkzeuge 10 einen Falzkopf 11 und mehrere Bördelrollen 12. Die Herstellung der Falzverbindung erfolgt durch vereinte Drehung von Dosenkörper 2a und Deckel 2b, zentriert durch den Falzkopf 11, entlang der Bördelrollen 12. Der Falzkopf 11 hat die Gegenkontur der Zielkontur des verfalzten Deckels 2b. Der Falzkopf 11 hat die Aufgabe, den Dosenkörper 2a und Deckel 2b durch einen gewissen Kopfdruck (Axialkraft relativ zur Dose 2 gesehen) in Drehung zu versetzen und den Dosenkörper 2a und Deckel 2b an den Bördelrollen 12 vorbeizudrehen. Die Bördelrollen 12 weisen eine Werkzeugkontur auf, die ein negatives Profil der Zielkontur des Dosen/Deckelverbunds ist. Für den Verformungsprozess werden gewisse Umformkräfte benötigt, die beim Falzvorgang zu einer Temperaturerhöhung an den Falzwerkzeugen 10, d.h. Bördelrollen 12 und/oder Falzkopf 11, führen.

Vorzugsweise kommen bei dem Verschließprozess genau zwei Bördelrollen 12 mit gegebenenfalls verschiedenen Werkzeugkonturen je Dose 2 zum Einsatz, eine Bördelrolle 12a zur Vorverformung und eine Bördelrolle 12b zur Fertigverformung.

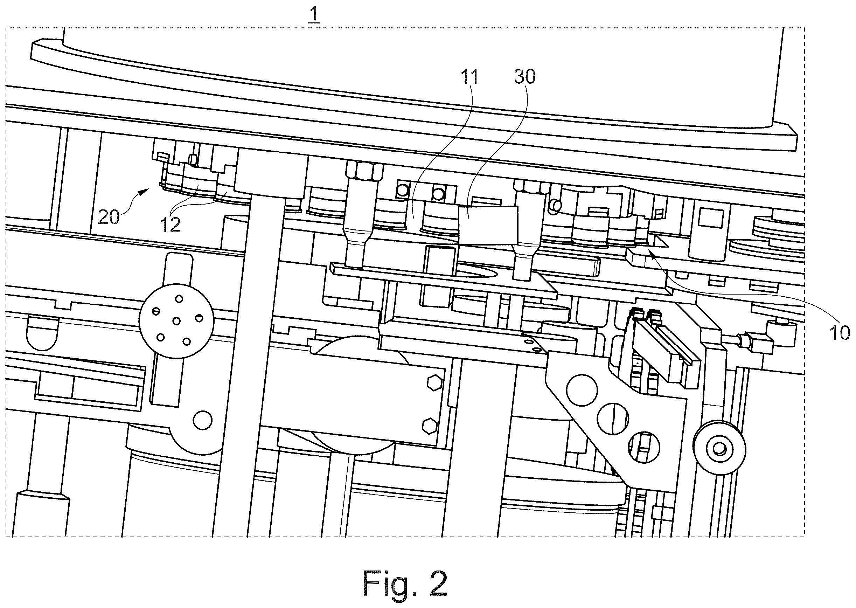

Die Figur 2 zeigt einen größeren Ausschnitt der Vorrichtung 1, aus dem erkennbar ist, dass die Falzwerkzeuge 10, umfassend mehrere Falzköpfe 11 und jeweils paarweise zugeordnete Bördelrollen 12, am Außenumfang eines gemeinsamen Verschließerkarussells 20 angeordnet sind. Die befüllten Dosenkörper 2a und zugehörigen Deckel 2b (in der Figur 2 nicht gezeigt) werden dem Verschließerkarussell 20 geeignet zugeführt und während einer im Wesentlichen vollständigen Umdrehung oder zumindest entlang eines Teilkreises des Verschließerkarussells 20 durch den oben beschriebenen Falzprozess miteinander verbunden, wodurch verschlossene, flüssigkeits- und gasdichte Dosen 2 hergestellt werden.

Der Falz- beziehungsweise Verschließprozess wird von einer Steuervorrichtung 50 (vgl. Fig. 1) gesteuert und/oder geregelt und gegebenenfalls überwacht. Die Steuervorrichtung 50 steht dazu mit den anzusteuernden und eventuell auszulesenden Komponenten der Vorrichtung 1, d.h. insbesondere mit den Falzwerkzeugen 10 und dem Verschließerkarussell 20, in Kommunikation und ist eingerichtet, um den Verschließprozess zu steuern und/oder zu regeln. Die Kommunikation kann drahtgebunden oder drahtlos, digital oder analog erfolgen. Die Kommunikation muss nicht notwendigerweise einen Informationsaustausch in beide Richtungen umfassen. Ein unidirektionaler Daten- und/oder Signalfluss fällt hierin unter den Begriff der "Kommunikation". Die Steuereinrichtung 50 muss nicht unbedingt durch eine zentrale Recheneinrichtung oder elektronische Regelung gebildet sein, sondern es sind dezentrale und/oder mehrstufige Systeme, Regelungsnetzwerke, Cloud-Systeme und dergleichen umfasst. Die Steuereinrichtung 50 kann zudem integraler Bestandteil einer übergeordneten Anlagensteuerung sein oder mit einer solchen kommunizieren.

Die Vorrichtung 1 weist ferner eine Werkzeugüberwachungseinrichtung 30 auf, die eingerichtet ist, um den Zustand eines, mehrerer oder vorzugsweise aller Falzwerkzeuge 10 zu überwachen. Die Werkzeugüberwachungseinrichtung 30 steht mit der Steuereinrichtung 50 in Kommunikation, so dass die Steuereinrichtung 50 Signale und/oder Daten von der Werkzeugüberwachungseinrichtung 30 beziehen und auswerten kann. Die Zustandsüberwachung der Falzwerkzeuge 10 hat den Zweck, Abweichungen derselben von einem Normalzustand zu detektieren, um daraus mittels der Steuereinrichtung 50 auf etwaige Fehler beim Verschließvorgang schließen zu können.

Gemäß einem Ausführungsbeispiel umfasst die Werkzeugüberwachungseinrichtung 30 zumindest eine Kamera 31, mit der Abweichungen vom Normalzustand optisch detektiert werden können, beispielsweise ein erhöhter Verschleiß eines oder mehrerer Falzwerkzeuge 10, Abrieb, Engelshaar, Beschädigungen, fehlende Dosenkörper 2a und/oder Deckel 2b usw., wodurch die Qualität des Dosenfalzes beeinträchtigt sein kann. Der Normalzustand eines Falzwerkzeugs 10, relativ zu dem Abweichungen gemessen werden, kann als ein definierter Bereich über Erfahrungswerte, Beobachtungen oder dergleichen bereitgestellt werden.

Mithilfe einer Kamera 31 als zumindest eine Komponente der Werkzeugüberwachungseinrichtung 30 kann eine visuelle Prüfung der Falzwerkzeuge 10, etwa auf untypische Abriebe oder Beschädigungen, vorgenommen werden, wobei vorzugsweise sowohl die Bördelrollen 12 als auch die Falzköpfe 11 überwacht werden. Die optische Überwachung mittels einer oder mehrerer Kameras 31 hat einen besonderen Vorteil darin, dass eine etwaige Beschädigung mit sehr geringer Reaktionszeit erkannt werden kann und entsprechende Maßnahmen (Ausgabe einer Warnung, Auslassen betroffener Falzstationen, Anagenstopp usw.) sehr schnellt ergriffen werden können.

Ein zusätzliches oder alternatives Überwachungsprinzip kann auf einer Temperaturmessung eines, mehrerer oder aller Falzwerkzeuge 10 beruhen. Zu diesem Zweck umfasst die Werkzeugüberwachungseinrichtung 30 einen oder mehrere Temperatursensoren 32, die eingerichtet sind, um die Temperatur der entsprechenden Falzwerkzeuge 10 zu detektieren. Dies kann durch Kontakt oder kontaktlos, beispielsweise mittels eines Pyrometers, erfolgen. Die Steuereinrichtung 50 kann bei Temperaturabweichungen von einem Normalprozess (Normaltemperatur beispielsweise 55°C bis 70°C; Abweichung im Fehlerfall beispielsweise >80°C) geeignete Maßnahmen einleiten, etwa eine Meldung ausgeben und/oder Einfluss auf den Verschließprozess nehmen, beispielsweise betroffene Falzstationen auslassen oder die Anlage beziehungsweise den Prozess stoppen. Wie im Fall der Kamera kann die Steuereinrichtung 50 einen zulässigen Temperaturbereich definieren. Weicht die detektierte Falzwerkzeug-Temperatur vom zulässigen Bereich ab, ist anzunehmen, dass am Falzwerkzeug 10 Schäden vorliegen, welche die Dosenqualität beeinträchtigen können. Der definierte, zulässige Bereich kann über Erfahrungswerte und/oder Beobachtung validiert und eingestellt werden. Die Temperaturmessung erfolgt vorzugsweise nur an den Bördelrollen 12, d.h. exklusive Falzkopf 11.

Alternativ oder zusätzlich zu einer optischen und/oder temperaturbasierten Werkzeugüberwachungseinrichtung 30 kann die Werkzeugüberwachung auch auf einem anderen technischen Prinzip beruhen, beispielsweise auf einer Kraftmessung, Beschleunigungsmessung usw. des zu überwachenden Falzwerkzeugs 10.

Zur Ermittlung eines etwaigen Fehlerzustands eines Falzwerkzeugs 10 wurde vorstehend beschrieben, dass die von der Werkzeugüberwachungseinrichtung 30 detektierten Werkzeugzustände (optische Beschaffenheit, Temperatur, Kraft, Beschleunigung usw.) mit einem zulässigen Bereich verglichen werden. Allerdings kann die Ermittlung eines Fehlerzustands auch auf andere Weise erfolgen, beispielsweise indem eine Zustandsänderung (Temperaturänderung usw.) aufgezeichnet und mit einem zulässigen Änderungsbereich verglichen wird. Alternativ ist es möglich, dass Werkzeugzustände mehrerer Falzwerkzeuge 10 miteinander verglichen werden, wobei eine Abweichung eines Werkzeugzustands oder weniger Werkzeugzustände von den übrigen Werkzeugzuständen auf einen Fehlerzustand des betreffenden Falzwerkzeugs 10 beziehungsweise der betreffenden Falzwerkzeuge 10 hindeutet. Alternativ oder zusätzlich können die detektierten Werkzeugzustände mit Modellrechnungen verglichen werden oder einer geeignet trainierten KI zugeführt werden, die dann in Abhängigkeit der Eingabe etwaige Fehlermeldungen ausgibt.

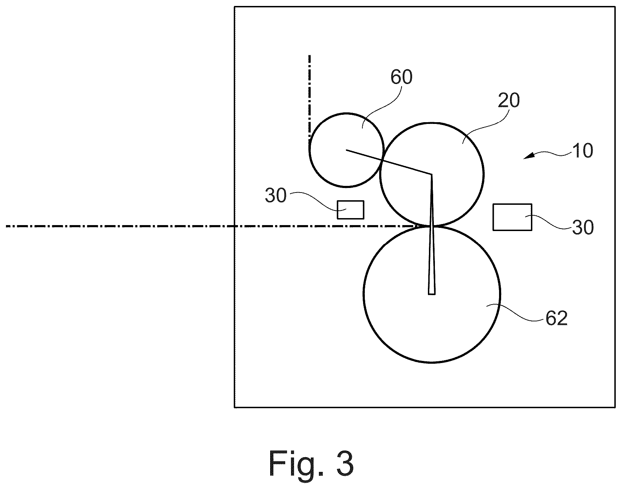

Die eine oder mehreren Werkzeugüberwachungseinrichtungen 30 sind vorzugsweise außerhalb des Arbeitsbereichs der Falzwerkzeuge 10 angeordnet. So können die Werkzeugüberwachungseinrichtungen 30 außerhalb des Verschließerkarussells 20 und relativ dazu stationär installiert sein und/oder auf einen Bereich des Verschließerkarussells 20, der zwischen einem Verschließereinlaufstern 60 (wie schematisch in Figur 3 gezeigt) und einem Verschließerauslaufstern 62 (wie schematisch ebenfalls in Figur 3 gezeigt) liegt, gerichtet sein. Allerdings ist es auch möglich, eine oder mehrere Werkzeugüberwachungseinrichtungen 30 am Verschließerkarussell 20 oder mitlaufend dazu zu installieren, wobei in diesem Fall beispielsweise einer Falzstation oder einer Gruppe von Falzstationen eine eigene Werkzeugüberwachungseinrichtung 30 zugeordnet sein kann. Die Vorrichtung 1, ausgestattet mit einer oder mehreren Werkzeugüberwachungseinrichtungen 30, ermöglicht eine Qualitätsprüfung der verschlossenen Dosen 2 über den indirekten Weg der Überwachung der Falzwerkzeuge 10. Eine Grauzone der stichprobenartigen Produktsicherung wird geschlossen. Die Anzahl an etwaigen fehlerhaften Dosen 2, d.h. der Ausschuss, kann signifikant reduziert werden. Da die Werkzeugüberwachungseinrichtungen 30 in Zusammenarbeit mit der Steuereinrichtung 50 automatisiert eine maschinenseitige Überwachung durchführt, können Bedienfehler ausgeschlossen oder zumindest reduziert werden. Die Zustandsüberwachung der Falzwerkzeuge 10 ist kontinuierlich und lückenlos möglich, wodurch letztlich eine (indirekte) Qualitätsprüfung jeder einzelnen, produzierten Dose 2 realisierbar ist. Neben der angestrebten Qualitätsprüfung der Dosen 2 ermöglicht die Werkzeugüberwachung zusätzlich ein Monitoring des Verschleißzustands der Falzwerkzeuge 10.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Verschließen von Dosen
- 2: Dose
- 2a: Dosenkörper
- 2b: Deckel
- 10: Falzwerkzeug
- 11: Falzkopf
- 12: Bördelrolle
- 12a: Bördelrolle zur Vorverformung
- 12b: Bördelrolle zur Fertigverformung
- 20: Verschließerkarussell
- 30: Werkzeugüberwachungseinrichtung
- 31: Kamera
- 32: Temperatursensor
- 50: Steuereinrichtung
- 60: Verschließereinlaufstern
- 62: Verschließerauslaufstern

## Patentansprüche

1. Vorrichtung (1) zum Verschließen von Dosen (2), umfassend jeweils einen Dosenkörper (2a) und Deckel (2b), vorzugsweise in einer Getränkeabfüllanlage, wobei die Vorrichtung (1) aufweist:
zumindest ein Falzwerkzeug (10), das eingerichtet ist, um einen Verschließvorgang durch Falzen von zu verbindenden Abschnitten des Dosenkörpers (2a) und des Deckels (2b) zu einem dichtenden Verbund durchzuführen;
zumindest eine Werkzeugüberwachungseinrichtung (30), die eingerichtet ist, um einen Zustand des zumindest einen Falzwerkzeugs (10) zu detektieren; und
eine Steuereinrichtung (50), die mit der Werkzeugüberwachungseinrichtung (30) in Kommunikation steht und eingerichtet ist, um anhand des von der Werkzeugüberwachungseinrichtung (30) detektierten Zustands einen fehlerhaften Verschließvorgang zu ermitteln.

2. Vorrichtung (1) nach Anspruch 1, **dadurch gekennzeichnet, dass** die Steuereinrichtung (50) eingerichtet ist, um auf einen fehlerhaften Verschließvorgang des von der Werkzeugüberwachungseinrichtung (30) detektierten Zustands zu schließen, wenn der Zustand und/oder eine zeitliche Änderung des Zustands außerhalb eines zulässigen Bereichs liegt, und/oder die Steuereinrichtung (50) eingerichtet ist, um einen fehlerhaften Verschließvorgang des von der Werkzeugüberwachungseinrichtung (30) detektierten Zustands durch Vergleich mit einer Modellrechnung und/oder Eingabe in ein Kl-Modell zu ermitteln.

3. Vorrichtung (1) nach Anspruch 1 oder 2, **dadurch gekennzeichnet, dass** mehrere Falzwerkzeuge (10) vorgesehen sind, wobei die zumindest eine Werkzeugüberwachungseinrichtung (30) eingerichtet ist, um einen Zustand jedes der Falzwerkzeuge (10) zu detektieren und die Steuereinrichtung (50) eingerichtet ist, um einen fehlerhaften Verschließvorgang eines der Falzwerkzeuge (10) durch Vergleich mit den Zuständen der anderen Falzwerkzeuge (10) zu ermitteln.

4. Vorrichtung (1) nach einem der vorigen Ansprüche, **dadurch gekennzeichnet, dass** die zumindest eine Werkzeugüberwachungseinrichtung (30) eine oder mehrere Kameras (31) zur optischen Detektion eines Zustands des zumindest einen Falzwerkzeugs (10) aufweist, wobei die Steuereinrichtung (50) vorzugsweise eingerichtet ist, um einen fehlerhaften Verschließvorgang zu ermitteln im Fall von erhöhtem Verschleiß und/oder von Abrieb und/oder Engelshaar und/oder Beschädigungen des zumindest einen Falzwerkzeugs (10) und/oder im Fall eines fehlenden Dosenkörpers (2a) und/oder Deckels (2b).

5. Vorrichtung (1) nach einem der vorigen Ansprüche, **dadurch gekennzeichnet, dass** die zumindest eine Werkzeugüberwachungseinrichtung (30) zumindest einen Temperatursensor (32) aufweist, der eingerichtet ist, um eine Temperatur als Zustand des zumindest einen Falzwerkzeugs (10) zu detektieren, wobei der Temperatursensor (32) vorzugsweise ein kontaktloser Temperatursensor (32) ist, besonders bevorzugt ein Pyrometer.

6. Vorrichtung (1) nach einem der vorigen Ansprüche, **dadurch gekennzeichnet, dass** das zumindest eine Falzwerkzeug (10) einen Falzkopf (11) und/oder eine oder mehrere Bördelrollen (12) umfasst, wobei das zumindest eine Falzwerkzeug (10) vorzugsweise genau zwei Bördelrollen (12) umfasst, eine Bördelrolle (12a) zur Vorverformung und eine Bördelrolle (12b) zur Fertigverformung.

7. Vorrichtung (1) nach Anspruch 5 und 6, **dadurch gekennzeichnet, dass** das zumindest eine Falzwerkzeug (10) einen Falzkopf (11) und eine oder mehrere Bördelrollen (12) umfasst, wobei der Temperatursensor (32) eingerichtet ist, um eine Temperatur zumindest einer der Bördelrollen (12) zu detektieren, vorzugsweise nicht jedoch des Falzkopfes (11).

8. Vorrichtung (1) nach einem der vorigen Ansprüche, **dadurch gekennzeichnet, dass** die zumindest eine Werkzeugüberwachungseinrichtung (30) außerhalb eines Arbeitsbereichs des zumindest einen Falzwerkzeugs (10) angeordnet ist.

9. Vorrichtung (1) nach einem der vorigen Ansprüche, **dadurch gekennzeichnet, dass** die Vorrichtung (1) ein Verschließerkarussell (20) und mehrere Falzwerkzeuge (10), die am Außenumfang des Verschließerkarussells (20) installiert sind, aufweist, wobei vorzugsweise die zumindest eine Werkzeugüberwachungseinrichtung (30) außerhalb des Verschließerkarussells (20) und relativ dazu stationär installiert ist und/oder auf einen Bereich des Verschließerkarussells (20), der zwischen einem Verschließereinlaufstern (60) und einem Verschließerauslaufstern (62) liegt, gerichtet ist und/oder am Verschließerkarussell (20) oder mitlaufend dazu installiert ist.

10. Verfahren zum Verschließen von Dosen (2), umfassend jeweils einen Dosenkörper (2a) und Deckel (2b), vorzugsweise in einer Getränkeabfüllanlage, wobei das Verfahren aufweist:
Durchführen eines Verschließvorgangs, indem zu verbindende Abschnitte des Dosenkörpers (2a) und des Deckels (2b) mittels eines Falzwerkzeugs (10) zu einem dichtenden Verbund gefalzt werden;
Detektieren eines Zustands des Falzwerkzeugs (10) mittels einer Werkzeugüberwachungseinrichtung (30); und
Ermitteln eines fehlerhaften Verschließvorgangs anhand des von der Werkzeugüberwachungseinrichtung (30) detektierten Zustands mittels einer Steuereinrichtung (50), die mit der Werkzeugüberwachungseinrichtung (30) in Kommunikation steht.

11. Verfahren nach Anspruch 10, **dadurch gekennzeichnet, dass** die Steuereinrichtung (50) auf einen fehlerhaften Verschließvorgang des von der Werkzeugüberwachungseinrichtung (30) detektierten Zustands schließt, wenn der Zustand und/oder eine zeitliche Änderung des Zustands außerhalb eines zulässigen Bereichs liegt, und/oder die Steuereinrichtung (50) einen fehlerhaften Verschließvorgang des von der Werkzeugüberwachungseinrichtung (30) detektierten Zustands durch Vergleich mit einer Modellrechnung und/oder Eingabe in ein KI-Modell ermittelt.

12. Verfahren nach Anspruch 10 oder 11, **dadurch gekennzeichnet, dass** mehrere Falzwerkzeuge (10) vorgesehen sind, wobei die Werkzeugüberwachungseinrichtung (30) einen Zustand jedes der Falzwerkzeuge (10) detektiert und die Steuereinrichtung (50) einen fehlerhaften Verschließvorgang eines der Falzwerkzeuge (10) durch Vergleich mit den Zuständen der anderen Falzwerkzeuge (10) ermittelt.

13. Verfahren nach einem der Ansprüche 10 bis 12, **dadurch gekennzeichnet, dass** die Werkzeugüberwachungseinrichtung (30) eine oder mehrere Kameras (31) zur optischen Detektion eines Zustands des Falzwerkzeugs (10) aufweist, wobei die Steuereinrichtung (50) vorzugsweise einen fehlerhaften Verschließvorgang ermittelt im Fall von erhöhtem Verschleiß und/oder von Abrieb und/oder Engelshaar und/oder Beschädigungen des Falzwerkzeugs (10) und/oder im Fall eines fehlenden Dosenkörpers (2a) und/oder Deckels (2b).

14. Verfahren nach einem der Ansprüche 10 bis 13, **dadurch gekennzeichnet, dass** die Werkzeugüberwachungseinrichtung (30) zumindest einen Temperatursensor (32) aufweist, der eine Temperatur als Zustand des zumindest einen Falzwerkzeugs (10) detektiert, wobei der Temperatursensor (32) vorzugsweise ein kontaktloser Temperatursensor (32) ist, besonders bevorzugt ein Pyrometer.

15. Verfahren nach Anspruch 14, **dadurch gekennzeichnet, dass** das zumindest eine Falzwerkzeug (10) einen Falzkopf (11) und eine oder mehrere Bördelrollen (12) umfasst, wobei der Temperatursensor (32) eine Temperatur zumindest einer der Bördelrollen (12) detektiert, vorzugsweise nicht jedoch des Falzkopfes (11).
